# EUROPEAN PATENT SPECIFICATION

(11) **EP 1 442 840 B1**
(45) Date of publication and mention of the grant of the patent: **29.03.2006**
(21) Application number: 04250485.2
(22) Date of filing: 29.01.2004
(51) Int. Cl.: B24B 49/12, B24B 37/04

(54) **Anti-scattering layer for polishing pad windows**
Anti-Streu-Beschichtung für Fenster von Polierkissen
Couche anti-diffusion pour une fenêtre d'un tampon polisseur

(30) Priority: 03.02.2003 US 357024
(43) Date of publication of application: 04.08.2004
(73) Proprietor: Rodel Holdings, Inc., Wilmington, DE 19899 (US)
(72) Inventor: Roberts, John V.H. Rodel Holdings, Inc., Wilmington DE 19899 (US)
(74) Representative: Kent, Venetia Katherine

(56) References cited:
- EP-A- 0 663 265
- EP-A- 1 176 630

## Description

### Field of the Invention

The present invention relates to polishing pads used for chemical-mechanical planarization (CMP), and in particular relates to such pads that have windows formed therein for performing optical end-point detection.

### Background of the Invention

In the fabrication of integrated circuits and other electronic devices, multiple layers of conducting, semiconducting, and dielectric materials are deposited on or removed from a surface of a semiconductor wafer. Thin layers of conducting, semiconducting, and dielectric materials may be deposited by a number of deposition techniques. Common deposition techniques in modem processing include physical vapor deposition (PVD), also known as sputtering, chemical vapor deposition (CVD), plasma-enhanced chemical vapor deposition (PECVD), and electrochemical plating (ECP).

As layers of materials are sequentially deposited and removed, the uppermost surface of the substrate may become non-planar across its surface and require planarization. Planarizing a surface, or "polishing" a surface, is a process where material is removed from the surface of the wafer to form a generally even, planar surface. Planarization is useful in removing undesired surface topography and surface defects, such as rough surfaces, agglomerated materials, crystal lattice damage, scratches, and contaminated layers or materials. Planarization is also useful in forming features on a substrate by removing excess deposited material used to fill the features and to provide an even surface for subsequent levels of metallization and processing.

Chemical mechanical planarization, or chemical mechanical polishing (CMP), is a common technique used to planarize substrates such as semiconductor wafers. In conventional CMP, a wafer carrier or polishing head is mounted on a carrier assembly and positioned in contact with a polishing pad in a CMP apparatus. The carrier assembly provides a controllable pressure to the substrate urging the wafer against the polishing pad. The pad is optionally moved (e.g., rotated) relative to the substrate by an external driving force. Simultaneously therewith, a chemical composition ("slurry") or other fluid medium is flowed onto the substrate and between the wafer and the polishing pad. The wafer surface is thus polished by the chemical and mechanical action of the pad surface and slurry in a manner that selectively removes material from the substrate surface.

A problem encountered when planarizing a wafer is knowing when to terminate the process. To this end, a variety of planarization end-point detection schemes have been developed. One such scheme involves optical in-situ measurements of the wafer surface and is described in U.S. Patent No. 5,964,643. The optical technique involves providing the polishing pad with a window transparent to select wavelengths of light. A light beam is directed through the window to the wafer surface, where it reflects and passes back through the window to a detector, e.g., an interferometer. Based on the return signal, properties of the wafer surface, e.g., the thickness of films (e.g., oxide layers) thereon, can be determined.

While many types of materials for polishing pad windows can be used, in practice the windows are typically made of the same material as the polishing pad, e.g., polyurethane. For example, U.S. Patent No. 6,280,290 discloses a polishing pad having a window in the form of a polyurethane plug. The pad has an aperture and the window is held in the aperture with adhesives.

A problem with such windows arises when they have surface roughness. For example, polyurethane windows are typically formed by slicing a section from a polyurethane block. Unfortunately, the slicing process produces microgrooves on either side of the window. The depth of the microgrooves range from about 10 to about 100 microns. The microgrooves on the bottom surface scatter the light used to measure the wafer surface topography, thereby reducing the signal strength of the in-situ optical measurement system. The microgrooves on the upper surface do not tend to scatter light as much as the bottom surface microgrooves due to the presence of a liquid slurry and proximity of the upper surface to the wafer.

Because of the loss in signal strength from scattering by the lower window surface, the measurement resolution suffers, and measurement variability is a problem. Also, because other sources of signal loss arise during the polishing process, at some point the pad or the pad window needs to be replaced.

EP-A-0663265 and EP-A-1176630 each discloses a polishing pad according to the preamble of following claim 1; the pad has a window and an anti-reflective coating is formed on the window.

### Summary of the Invention

The present invention addresses the problem of light scattering in end-point detection systems used in CMP systems that employ a transparent window in the polishing pad.

One aspect of the invention is an apparatus comprising a polishing pad body having an aperture formed therein, as defined in the accompanying claims. A window is fixed in the aperture, the window having a lower surface with a surface roughness capable of scattering light (e.g.10% or more of the light incident thereon). An anti-scattering layer is formed over the lower surface of the window to reduce the scattering of light by the roughened lower surface.

Another aspect of the invention is a method of performing in-situ optical measurements of a wafer in a CMP system. The method includes providing the CMP system with a polishing pad as defined in the accompanying claims, which has a window, the window having a roughened lower surface upon which is formed an anti-scattering layer, and directing a first beam of light through the anti-scattering layer and the window to the wafer. The method further includes reflecting the first beam of light from the wafer to form a second beam of light that passes back through the window and the anti-scattering layer. The method also includes detecting the second beam of light, converting the detected second beam of light to an electrical signal, and processing the electrical signal to deduce one or more properties of the wafer.

### Brief Description of the Drawings

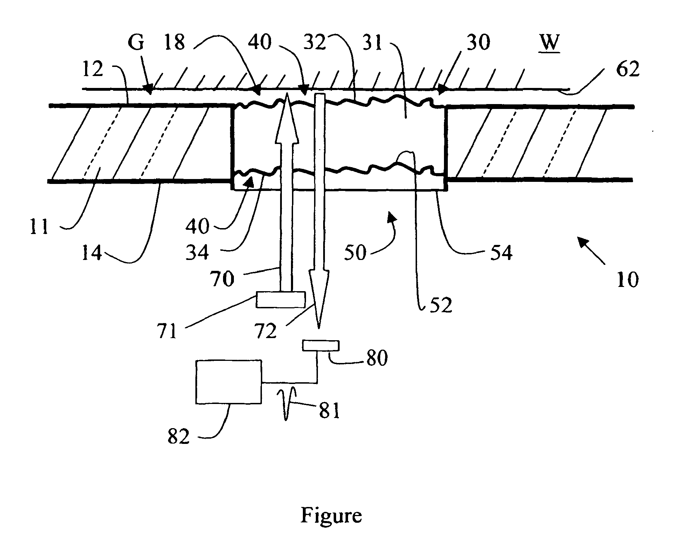

The Figure is a close-up cross-sectional view of a CMP system showing a polishing pad having a window with the anti-scattering layer formed on the lower surface of the window, a wafer residing adjacent the upper surface of the polishing pad, and the basic elements of an in-situ optical detection system.

### Detailed Description of the Invention

In the following detailed description of the embodiments of the invention, reference is made to the accompanying drawings that form a part hereof, and in which is shown by way of illustration specific embodiments in which the invention may be practiced. These embodiments are described in sufficient detail to enable those skilled in the art to practice the invention, and it is to be understood that other embodiments may be utilized and that changes may be made without departing from the scope of the present invention. The following detailed description is, therefore, not to be taken in a limiting sense, and the scope of the present invention is defined only by the appended claims.

With reference to the Figure, there is shown a close-up cross-sectional view of a polishing pad 10. Polishing pad 10 has a body region 11 that includes an upper surface 12 and a lower surface 14. Polishing pad 10 may be any of the known polishing pads, such as urethane-impregnated felts, microporous urethane pads of the type sold under the tradename POLITEX by Rodel, Inc., of Newark Delaware, or filled and/or blown composite urethanes such as the IC-Series and MH-series pads, also manufactured by Rodel.

Polishing pad 10 also includes an aperture 18 in body 11 within which is fixed a window 30. In one example embodiment, window 30 is permanently fixed in the aperture, while in another example embodiment it is removably fixed in the aperture. Window 30 has a body region 31 that includes an upper surface 32 and a lower surface 34. Window 30 is transparent to wavelengths of light used to perform optical in-situ measurements of a wafer W during planarization. Example wavelengths range anywhere from 190 to 3500 nanometers.

Window 30 is made of any material (e.g., polymers such as polyurethane, acrylic, polycarbonate, nylon, polyester, etc.) that might have roughness 40 on one or more of its surfaces. In an example embodiment of the present invention, roughness 40 is capable of scattering significant amounts (e.g., 10% or more) of the light incident thereon when performing in-situ end-point measurements.

In an example embodiment, roughness 40 arises from an instrument (not shown) used to form the window by cutting it from a larger block of window material. However, roughness 40 can arise from any number of other sources, such as inherent material roughness, not polishing the window material, improperly polishing the window material, etc.

With continuing reference to the Figure, window 30 includes an anti-scattering layer 50 formed over lower surface 34. Layer 50 has an upper surface 52 at the interface of lower surface 34, and a lower surface opposite the upper surface. Anti-scattering layer 50 is formed from any material that is transparent to one or more of the wavelengths of light used to perform in-situ optical measurements of a wafer during planarization. Further, in an example embodiment, layer 50 has an index of refraction that is as close as possible to the index of refraction of window 30. In an example embodiment, window 30 is made of polyurethane having an index of refraction of 1.55 at a wavelength of 670 nanometers, which is a diode laser wavelength. Further in the example embodiment, layer 50 is polyurethane having essentially the same refractive index of 1.55 at 670 nanometers. In another example embodiment, layer 50 is formed from the same material as window 30.

In example embodiments, layer 50 includes a transparent solvent-borne lacquer, such as made from acrylic, polyurethane, polystyrene, polyvinyl chloride (PVC), or other transparent soluble polymers. Another example embodiment, layer 50 includes a radiation-cured coating, such as ultraviolet (UV)-cured acrylic or polyurethane. In another example embodiment, two or more component coatings, such as epoxies, polyurethanes, and/or acrylics are combined. In other example embodiments, single-component air-cured transparent coatings, such as moisture-cured polyurethanes, oxygen-polymerized enamels and like coatings that cure upon exposure to the atmosphere are used in the formation of layer 50. Likewise, in another example embodiment, hot melt coatings can be used, such as hot melt films and powder coatings. In short, any transparent coating that acts to substantially reduce the surface roughness of lower surface 34 is suitable for use as layer 50.

Layer 50 is formed on lower surface 34 by any one of the known techniques suitable to the material being used, such as spray coating, dipping, brushing, melting, etc. It is preferred that layer 50 be conformal to the roughness on lower surface 34 to minimize scattering, yet be thick enough to have a substantially flat lower surface 54. In an example embodiment, lower surface 54 is made flat by polishing. In another example embodiment, lower surface 54 naturally forms a reasonably flat surface by virtue of the technique used to form the layer. For example, melting a section of polyurethane onto the window and letting the melted material flow will fill in the roughness 40 while also flowing out on the opposite surface to form a flat lower surface 54.

It is important to note that lower surface need not be entirely flat. For example, lower surface 54 can have slowly varying surface curvature that does not scatter light, but merely reflects light at slight angle. This is because anti-scattering layer 50 is designed to eliminate light scattering, which is the main cause of signal degradation in optical in-situ monitoring systems.

### Method of Operation

With continuing reference to the Figure, the operation of the present invention for performing in-situ optical measurements of wafer W having a surface 62 to be measured is now described. In operation, a first light beam 70 is generated by a light source 71 and is directed towards wafer surface 62. First light beam 70 has a wavelength that is transmitted by both window 30 and anti-scattering layer 50.

First light beam 70 reaches wafer surface 62 by passing through anti-scatter layer 50, window lower surface 34, window body portion 31, window upper surface 32, and a gap 66 between the window upper surface and the wafer surface. Gap G is occupied by a slurry 68 (not shown), which in practice acts as an index-matching fluid to reduce the scattering of light from roughness 40 on window upper surface 34. First light beam 70-- or more specifically, a portion thereof reflects from wafer surface 62. Wafer surface 62 is shown schematically herein. In actuality, wafer surface 62 represents surface topography or one or more interfaces present on the wafer due to different films (e.g., oxide coatings).

The reflection of first light beam 70 from wafer surface forms a second light beam 72 that is directed back along the incident direction of first light beam 70. In an example embodiment where wafer surface 62 includes multiple interfaces due to one or more films resided thereon, reflected light beam 72 includes interference information due to multiple reflections.

Upon reflection from wafer surface 62, second light beam 72 traverses gap G (including the slurry residing therein), and passes through window upper surface 34, window body 31, window lower surface 31, and finally through anti-scattering layer 50. It is noteworthy that the reflections from each interface, including those on the wafer are two-fold because of retro-reflection from wafer surface 62. In other words, the light passes twice through each interface with the exception of the actual wafer surface itself. The result is a significant loss of energy relative to the original beam, which translates into a diminished signal strength.

Upon exiting anti-scattering layer 50, light beam 72 is detected by a detector 80. In an example embodiment, a beam splitter (not shown) is used to separate first and second light beams 70 and 72. Detector 80 then converts the detected light to an electrical signal 81, which is then processed by a computer 82 to extract information about the properties of wafer 60, e.g., film thickness, surface planarity, surface flatness, etc.

Because window 30 includes anti-scattering layer 50, light loss due to scattering from roughness 40 on window lower surface 34 is greatly diminished. This results in a signal strength that is greater than otherwise possible. The inventors have conducted experiments on polishing pad windows having rough surfaces of the type described above. The inventors measured signal strength in second light beam 72 with and without the anti-scattering layer 50 and found up to a 3X improvement in the signal strength when the anti-scattering layer 50 of the present invention was employed.

Such improvements in signal strength lead to significant improvements in the in-situ optical measurement of wafer surface parameters. In particular, reliability and measurement accuracy are improved. Further, the pad lifetime can be extended because the stronger signals make other sources of signal loss less significant. Stated differently, the reduction in scattering from roughened lower window surface 34 allows the other sources of scattering - such as increased roughness of the window upper surface during polishing, and increasing amounts of debris from the planarization process - to become larger without having to replace the pad or the window.

Various embodiments of the invention have been described and illustrated. However, the description and illustrations are by way of example only. Other embodiments and implementations are possible within the scope of the accompanying claims

## Claims

1. A polishing pad useful for chemical mechanical planarization, the polishing pad comprising:
a polishing pad body (11) having an aperture (18) formed therein;
a window (30) fixed in the aperture, the window having an upper surface (32) and a lower surface (34) having a surface roughness, the surface roughness being capable of scattering light incident thereon; and
a layer (50) formed over the lower surface of the window, the layer having a surface (52) that forms an interface with the lower surface (34) and that is conformal to the surface roughness of the lower surface, **characterized in that** the layer (50) is an anti-scattering layer
being thick enough to have a substantially flat surface (54) opposing the conformal surface (52), and
having a substantially flat surface (54) opposing the conformal surface,
wherein the anti-scattering layer (50) reduces the scattering of light having a wavelength of from 190 nanometers to 3500 nanometers by the rough lower surface.

2. The polishing pad of claim 1, wherein the surface roughness is capable of scattering 10% or more of the light incident thereon in the absence of the anti-scattering layer (50)

3. The polishing pad of claim 1, wherein the anti-scattering layer (50) includes a transparent solvent-borne lacquer.

4. The polishing pad of claim 1, wherein the anti-scattering layer (50) includes a radiation-cured transparent material.

5. The polishing pad of claim 1, wherein the window (30) is made of a first material and the anti-scattering layer (50) is also made of the first material.

6. A method of performing in-situ optical measurements of a wafer in a chemical-mechanical planarization (CMP) system, comprising:
providing the CMP system with a polishing pad as claimed in any of claims 1 to 5;
directing a first beam of light through the anti-scattering layer and the window of the pad to the wafer; and
reflecting the first beam of light from the wafer to form a second beam of light that passes back through the window and the anti-scattering layer.

7. The method of claim 6, further including:
detecting the second beam of light;
converting the detected second beam of light to an electrical signal; and
processing the electrical signal to deduce one or more properties of the wafer.

## Patentansprüche

1. Polierkissen, das für eine chemisch mechanische Einebnung bzw. Planarisierung verwendbar ist, wobei das Polierkissen umfaßt:
einen Polierkissenkörper (11), der eine Öffnung (18) darin ausgebildet aufweist;
ein Fenster (30), das in der Öffnung festgelegt ist, wobei das Fenster eine obere Oberfläche (32) und eine untere Oberfläche (34) aufweist, die eine Oberflächenrauheit besitzen, wobei die Oberflächenrauheit fähig ist, darauf einfallendes Licht zu streuen; und
eine Schicht (50), die über der unteren Oberfläche des Fensters ausgebildet ist,
wobei die Schicht eine Oberfläche (52) aufweist, welche eine Zwischenschicht mit der unteren Oberfläche (34) ausbildet und welche mit der Oberflächenrauheit der unteren Oberfläche übereinstimmt,
**dadurch gekennzeichnet, daß** die Schicht (50) eine Antistreuschicht ist, die dick genug ist, um eine im wesentlichen ebene Oberfläche (54) aufzuweisen, die der konformen Oberfläche (52) gegenüberliegt, und
die eine im wesentlichen ebene bzw. flache Oberfläche (54) aufweist, die der konformen bzw. entsprechenden bzw. winkeltreuen Oberfläche gegenüberliegt, wobei die Antistreuschicht (50) das Streuen von Licht, das eine Wellenlänge von 190 Nanometer bis 3500 Nanometer aufweist, durch die rauhe untere Oberfläche reduziert.

2. Polierkissen nach Anspruch 1, wobei die Oberflächenrauheit fähig ist, 10 % oder mehr des darauf einfallenden Lichts in der Abwesenheit der Antistreuschicht (50) zu streuen.

3. Polierkissen nach Anspruch 1, wobei die Antistreuschicht (50) einen transparenten lösungsmittelhaltigen Lack enthält.

4. Polierkissen nach Anspruch 1, wobei die Antistreuschicht (50) ein strahlungsgehartetes transparentes Material enthält.

5. Polierkissen nach Anspruch 1, wobei das Fenster (30) aus einem ersten Material gefertigt bzw, hergestellt ist und die Antistreuschicht (50) ebenfalls aus dem ersten Material hergestellt ist.

6. Verfahren zum Ausführen von in-situ optischen Messungen eines Wafers in einem chemisch-mechanischen Einebnungssystem bzw. Planarisierungssystem (CMP), umfassend:
ein Versehen des CMP Systems mit einem Polierkissen nach einem der Ansprüche 1 bis 5;
ein Richten eines ersten Lichtstrahls durch die Antistreuschicht und das Fenster des Kissens auf den Wafer; und
ein Reflektieren des ersten Lichtstrahls von dem Wafer, um einen zweiten Lichtstrahl auszubilden, welcher zurück durch das Fenster und die Antistreuschicht durchtritt.

7. Verfahren nach Anspruch 6, weiters beinhaltend:
ein Detektieren des zweiten Lichtstrahls;
ein Umwandeln des detektierten zweiten Lichtstrahls in ein elektrisches Signal; und
ein Bearbeiten des elektrischen Signals, um eine oder mehrere Eigenschaft(en) des Wafers abzuleiten.

## Revendications

1. Tampon de polissage destiné à être utilisé pour la planarisation chimicomécanique, le tampon de polissage comprenant :
un corps (11) de tampon de polissage dans lequel est formée une ouverture (18) ;
une fenêtre (30) fixée dans l'ouverture, la fenêtre ayant une surface supérieure (32) et une surface inférieure (34) présentant une certaine rugosité de surface, la rugosité de surface étant en mesure de diffuser la lumière incidente ; et
une couche (50) formée sur la surface inférieure de la fenêtre, la couche ayant une surface (52) qui forme une interface avec la surface inférieure (34) et qui est conforme à la rugosité de surface de la surface inférieure,
**caractérisé en ce que** la couche (50) est une couche anti-diffusion qui est suffisamment épaisse pour avoir une surface sensiblement plane (54) en regard de la surface conforme (52), et
la couche possédant une surface sensiblement plane (54) en regard de la surface conforme,
où la couche anti-diffusion (50) réduit la diffusion de la lumière qui présente une longueur d'onde comprise entre 190 nm et 3 500 nm par la surface inférieure rugueuse.

2. Tampon de polissage selon la revendication 1, où la rugosité de surface est en mesure de diffuser 10 %, ou davantage, de la lumière incidente en l'absence de la couche anti-diffusion (50).

3. Tampon de polissage selon la revendication 1, où la couche anti-diffusion (50) comporte un vernis issu d'un solvant transparent.

4. Tampon de polissage selon la revendication 1, où la couche anti-diffusion (50) comporte un matériau transparent durci par l'application d'un rayonnement.

5. Tampon de polissage selon la revendication 1, où la fenêtre (30) est faite d'un premier matériau et la couche anti-diffusion (50) est également faite du premier matériau.

6. Procédé permettant d'effectuer des mesures optiques in situ d'une plaquette dans un système de planarisation chimicomécanique (CMP), le procédé comprenant les opérations suivantes :
doter le système CMP d'un tampon de polissage tel que défini dans l'une quelconque des revendications 1 à 5 ;
diriger un premier faisceau de lumière à travers la couche anti-diffusion et la fenêtre du tampon à destination de la plaquette ; et
faire réfléchir le premier faisceau de lumière par la plaquette de façon à former un deuxième faisceau de lumière qui retraverse la fenêtre et la couche anti-diffusion.

7. Procédé selon la revendication 6, comportant en outre les opérations suivantes :
détecter le deuxième faisceau de lumière ;
convertir le deuxième faisceau de lumière détecté en un signal électrique ; et
traiter le signal électrique afin d'en déduire une ou plusieurs propriétés de la plaquette.
